Europäisches Patentamt

European Patent Office

Office européen des brevets

(11) Publication number: **0 428 301 A1**

# EUROPEAN PATENT APPLICATION

(21) Application number: 90312004.6

(22) Date of filing: 01.11.90

(51) Int. Cl.⁵: **H02K 11/00**, H02K 21/22, H02K 21/48

(30) Priority: 14.11.89 US 436379

(43) Date of publication of application:
22.05.91 Bulletin 91/21

(84) Designated Contracting States:
DE FR GB IT SE

(71) Applicant: BRIGGS & STRATTON CORPORATION
12301 West Wirth Street
Wauwatosa, Wisconsin 53222-2110(US)

(72) Inventor: Tharman, Paul Arthur
5100 North Lovers Lane Road
Milwaukee, Wisconsin 53225(US)

(74) Representative: Sanderson, Laurence Andrew et al
SANDERSON & CO. European Patent Attorneys 34, East Stockwell Street
Colchester Essex CO1 1ST(GB)

(54) Integral stator and rectifier for internal combustion engines.

(57) An alternator assembly for an internal combustion engine is disclosed in which the rectifier diode is mounted directly on the stator in series with one of the wire coils instead of being connected in an output plug. The integral diode-stator alternator assembly may be used in both single circuit or dual circuit alternators. This arrangement increases heat dissipation from the diode and decreases cost by eliminating the need for heat shrinkable tubing on the output plug.

FIG. 4

EP 0 428 301 A1

# INTEGRAL STATOR AND RECTIFIER FOR INTERNAL COMBUSTION ENGINES

This invention relates to auxiliary electrical systems for internal combustion engines, and more particularly to an alternator that is a source of unidirectional current for charging a storage battery or for operating other accessories.

The present invention is concerned with engines that are used for powering machines such as riding tractors, riding mowers and snowblowers. These machines are often equipped with a storage battery for engine starting and with headlights or other accessories that are normally operated only when the engine is running. The storage battery must be charged with unidirectional current (half-wave or full-wave rectified AC), but the other accessories can usually be energized with alternating current.

The engine for such a machine typically has an alternator that comprises one or more permanent magnets carried for orbital motion by a rotatable driven shaft of the engine, a magnetically cooperable stator core mounted on the engine body adjacent to the magnet orbit, and one or more sets of core windings in which alternating current is induced due to the movement of the magnets. Such an alternator has many advantages over a DC generator, but when it is employed to energize an electrical system that includes the storage battery, the battery must be charged through a rectifier.

If the alternator is used exclusively to charge the storage battery, the alternator has a single output of rectified current. A dual circuit or split alternator having both alternating current and direct current outputs may be used when direct current is needed to charge the battery and alternating current is needed to operate accessories such as headlights.

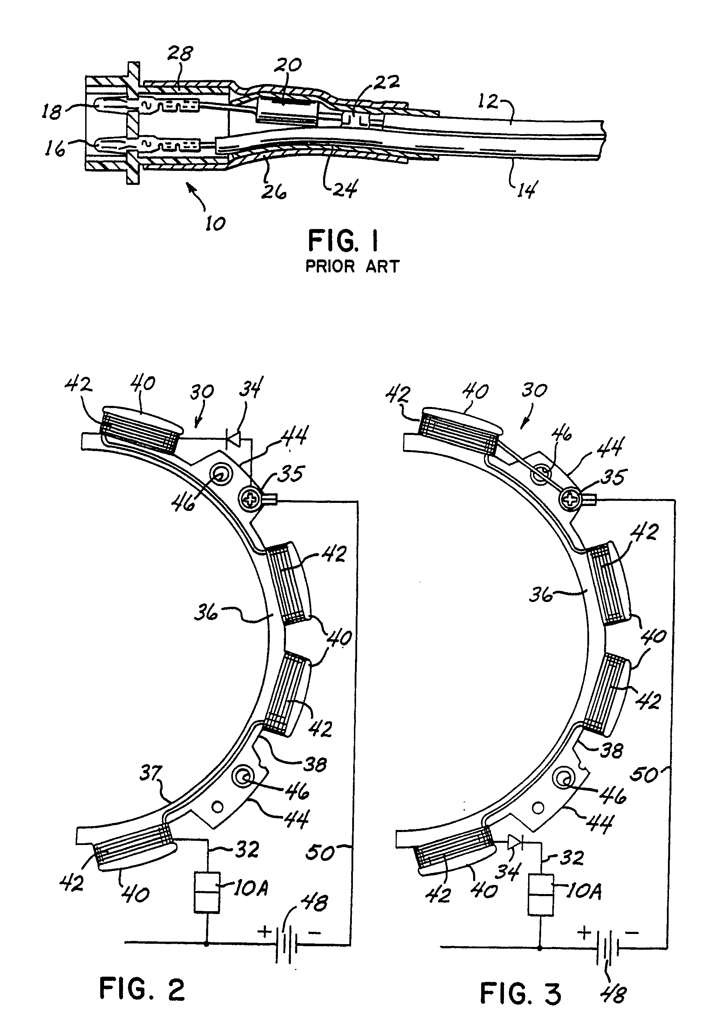

The diode used to rectify the current that charges the storage battery is typically located in an output plug connected by one or more wires to the alternator's stator. FIG. 1 hereto is an example of a typical prior art plug. In FIG. 1, plug 10 is connected to the stator (not shown) via lead wires 12 and 14. Lead wire 14 provides an alternating current output via plug element 16. The output of plug element 18 is direct current which has been rectified by diode 20. Diode 20 is connected in series with lead wire 12 by a crimp connector 22. The other terminal of diode 20 is connected to plug element 18. A small diameter tubing piece 24 made of a plastic heat shrinkable material is heat shrunk around lead elements 12 and 14 and diode 20 to protect and insulate diode 20. A second heat shrinkable tubing piece 26 surrounds tubing piece 24 as well as the rear portion 28 of the plug.

It is apparent from the above description of the plug depicted in FIG. 1 that the creation of the prior art plug is a difficult and time-consuming task since the plug contains a number of small parts and since the diode must be well insulated. The insulation requirement necessitates use of heat shrinkable tubing and extra heating steps. The need for the heat shrinkable tubing increases the cost of the plug, and also makes it difficult to dissipate heat from the diode. The heat shrunk tubing is not aesthetically pleasing.

Therefore, it is desirable to decrease the manufacturing cost of alternator assemblies including their output plugs, and to improve the heat dissipation from the rectifier diode.

An alternator assembly for an internal combustion engine is disclosed having a stator means that includes at least one coil means. The coil means cooperates with a moving magnetic field to produce an output current in the coil means. A rectifier means mounted on the stator means rectifies the output current to yield direct current for charging a storage battery.

In one embodiment, the stator means comprises a stationary annular ring member having an inner surface and an outer surface. The coil means, which may consist of a plurality of spaced wire coils, is mounted circumferentially on the outer surface of the stator means. A moving magnetic field is provided by a plurality of rotating magnets, the magnets being arranged in opposing relation to the wire coils and concentric with them. The rotating magnets are preferably mounted on an inner surface of a rotating flywheel, so that the rotation of the flywheel induces current flow in the coils. The output current is an unregulated half-wave rectified direct current.

In another embodiment, the alternator assembly has both alternating current and direct current outputs. In this embodinent, the stator means includes a first coil means and a second coil means. The first coil means includes a first plurality of spaced apart wire coils arranged circumferentially about a first portion of the outer surface of the stator's annular ring member. The second coil means includes a second plurality of spaced wire coil means arranged circumferentially about a second portion of the ring member's outer surface. Both pluralities of coils cooperate with a moving magnetic field. The first plurality of coils produces a first output current that is rectified by a rectifier means mounted on the stator means. The second plurality of coils produces a second output current, which is alternating current, to energize accessories such as headlights. Current is induced in both the first and second pluralities of wire coils by a moving magnetic field consisting of a plurality of rotating magnets arranged in opposing relation to the wire coils and concentric with the coils. The rotating magnets are preferably mounted on an inner surface of a rotating flywheel.

Since the rectifier means is mounted directly on the stator means, forced air cooling from the rotating flywheel helps dissipate heat from the rectifier means. The mounting of the rectifier means directly on the stator means also avoids the additional cost of the heat shrink tubing on the output plug which in prior art devices was necessary to insulate the diode. The total savings achieved by the present invention is about 2% of the alternator's manufacturing cost. This savings is due to the elimination of the heat shrinkable tubing for the plug and the heating steps required to shrink the tubing. In addition, the elimination of the heat shrink tubing makes the output plug more aesthetically pleasing.

It is a feature and advantage of the present invention to facilitate heat dissipation in an alternator assembly.

It is another feature and advantage of the present invention to reduce the cost of an alternator assembly while making it more aesthetically pleasing.

These and other features and advantages of the present invention will be apparent to those skilled in the art from the following detailed description of preferred embodiments and the attached drawings.

In the drawings:

FIG. 1 is a side sectional view of a prior art alternator output plug.

FIG. 2 is a top plan view of a stator means for an alternator assembly wherein the rectifier means is located on the low or ground side of the stator.

FIG. 3 is a top plan view of a stator means having a a single DC output, in which the rectifier means is located on the output side of the stator means.

FIG. 4 is a top plan view of a dual circuit or split alternator stator having an alternating current output and a direct current output, where the rectifier means is located on the ground side of the direct current portion of the stator means.

FIG. 5 is a top plan view of a split alternator stator similar to FIG. 4, except that the rectifier means is located on the output side of the direct current portion of the stator means.

Referring to the embodiments depicted in FIGS. 2-5:

FIG. 2 depicts an alternator stator 30 having a single unidirectional current output on line 32, and wherein the single diode rectifier 34 has its anode connected to ground at terminal 35.

In FIG. 2, a stationary annular ring member 36 has an inner surface 37 and an outer surface 38. Attached to the outer surface 38 is a plurality of radially projecting pole teeth 40 arranged at substantially uniform intervals on the outer surface, and a first plurality of first coil means 42. Each coil in first coil means 42 is wound on its respective pole teeth member 40.

Pole teeth 44 have no windings on them, but instead have holes 46 through them to receive bolts (not shown) or the like by which the stator can be secured to an engine body.

A battery 48 has one terminal connected to ground terminal 35 via line 50 and its other terminal connected to stator output line 32 via output plug 10A.

Stator 30 is intended to be mounted on the body of a small engine, adjacent to its rotating flywheel and coaxial with the flywheel. Rotating magnets (not shown) are mounted on an inner surface of the rotating flywheel (not shown) and are arranged in opposing relation to first coil means 42 and concentric therewith. The rotating magnet creates a varying flux that induces an alternating current in each of the coils in first coil means 42. Rectifier 34 rectifies this alternating current so that the output on output line 32 is unregulated, half-wave rectified direct current for charging storage battery 48.

The embodiment depicted in FIG. 3 is identical to the one depicted in FIG. 2 except that diode rectifier 34 is now located on the output side of stator 30. FIGS. 2 and 3 illustrate that rectifier means 34 may be located in any position as long as it is connected in series with at least one of the coils comprising first coil means 42.

In FIGS. 3-5, components having functions corresponding to those of FIG. 2 have been given the same numerical designations. The alternator assembly depicted and described in connection with FIG. 3 operates in a similar manner to the one depicted in FIG. 2.

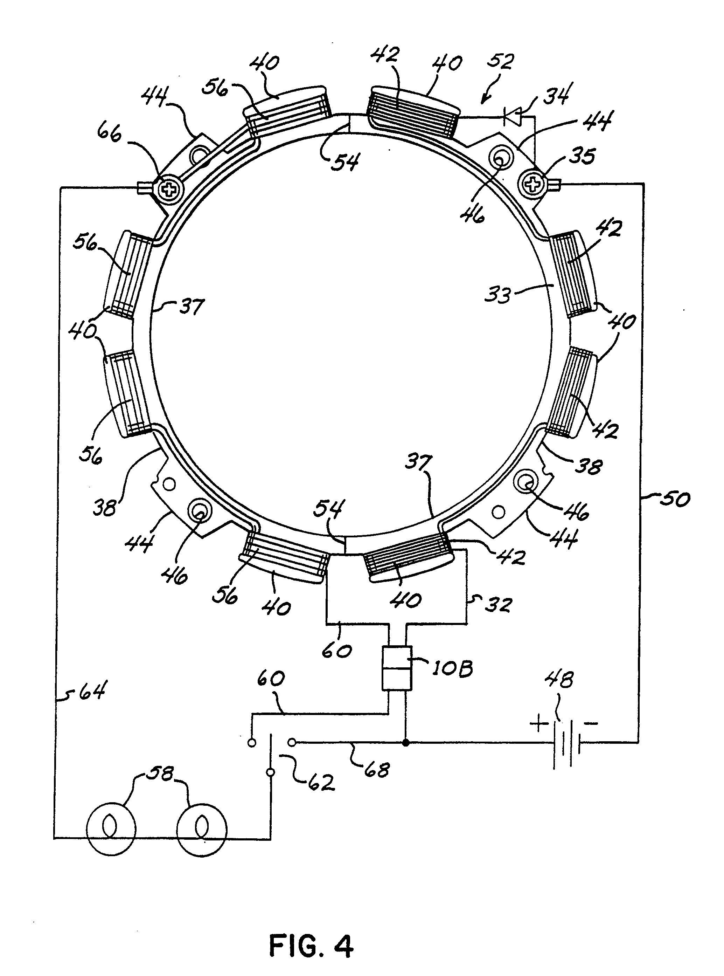

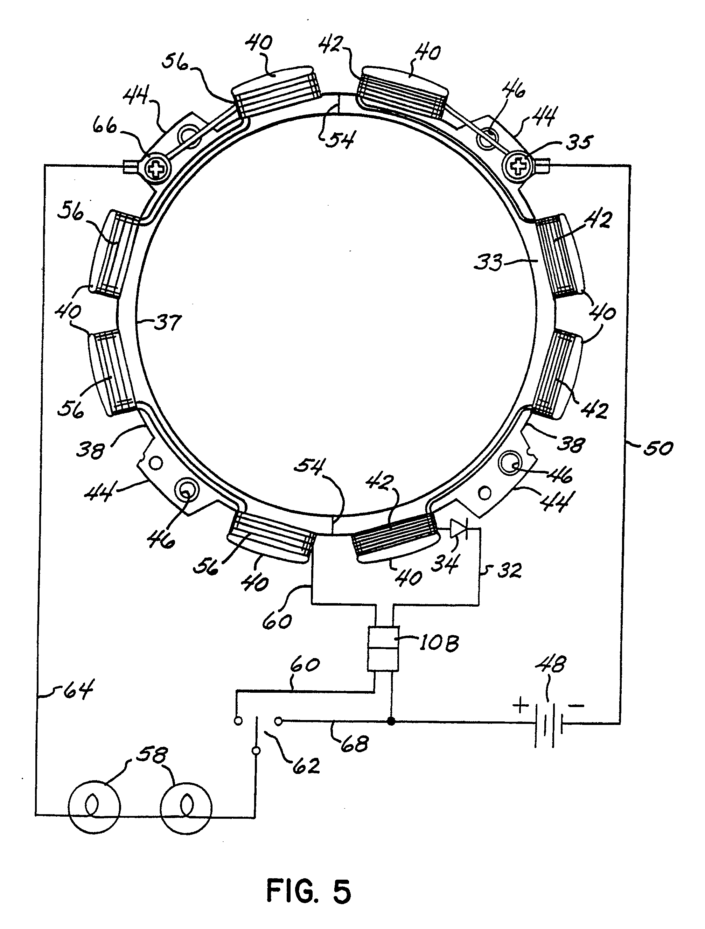

FIGS. 4 and 5 depict another embodiment of the present invention having a dual circuit or split alternator configuration. Referring to FIG. 4, stator 52 comprises a stationary annular ring member 33 having an inner surface 37 and an outer surface 38. A plurality of pole teeth 40 project radially from the outer surface of annular ring member 33 and are generally spaced evenly apart. Stator 52 is split into a first portion and a second portion at lines 54. A first coil means, consisting of a first plurality of spaced wire coils 42, is arranged circumferentially about the first portion of the outer surface of annular ring member 33. Stator 52 also has a second coil means consisting of a second plurality of spaced wire coils 56 arranged circumferentially about the second portion of the outer surface of annular ring member 33. Each coil in the first and second pluralities of coils is wound on its own pole teeth member 40. The second coil means consisting of coils 56 is typically wound of a heavier gauge wire and has fewer turns than the first coil means consisting of coils 42.

The alternating current induced in coils 56 is suitable to be applied directly to energize headlights 58 via line 60. A switch 62 in the circuit consisting of coils 56 and headlights 58 enables the headlights to be turned on and off. Switch 62 for headlights 58 may be a double-throw switch with a central "OFF" position as depicted in FIGS. 4 and 5. When switch 62 is in one ON position, headlights 58 are energized by the second coil means via line 60. When switch 62 is in its other ON position, headlights 58 are connected to storage battery 48 via line 68 so that headlights 58 may be energized by battery 48 when the engine is not running. Headlights 58 could be replaced by another accessory for energization by the alternating current output from the second coil means. Headlights 58 are grounded via line 64 at ground terminal 66.

The first coil means consisting of coils 42 produce an alternating current which is rectified by single diode rectifier 34. Diode 34 is mounted on stator 52 by attaching its anode to ground terminal 35, and its cathode to one of the coils 42.

The unregulated, half-wave rectified direct current produced in the first coil means is output via line 32 to charge storage battery 48. One terminal of battery 48 is grounded to ground terminal 35 via line 50.

The embodiments depicted in FIGS. 4 and 5 operate in a similar manner to the embodiments depicted in FIGS. 1 and 2, except that the embodiments depicted in FIGS. 4 and 5 produce both alternating and direct current. In FIGS. 4 and 5, a moving magnetic field is provided by a plurality of rotating magnets (not shown) mounted on an inner surface of a rotating flywheel (not shown). The magnets are arranged in opposing relation to the first and second pluralities of wire coils and are concentric with the coils. The varying flux induces an alternating current in both the first and second pluralities of wire coils. The alternating current induced in the second plurality of wire coils is output via line 60 and output plug 10B to energize headlights 58 when switch 62 is in the appropriate ON position. The alternating current induced in the first plurality of wire coils, coils 42, is rectified by rectifier means 34. The output from coils 42 is unregulated, half-wave rectified direct current which is output via line 32 and output plug 10B to charge storage battery 48. In the embodiments depicted in FIGS. 4 and 5, the DC current output is typically about 3 amps, while the AC output current is typically about 5 amps.

Rectifier diode 34 may be placed in any position along the first portion of annular ring member 33 as long as it is in series with one or more of coils 42. FIG. 5 depicts an embodiment similar to that of FIG. 4 except diode 34 is now positioned near the output of coils 42.

In the embodiments depicted in FIGS. 2 and 4, the anode of diode 34 may be mounted to the stator's steel laminations on the low or ground side with a terminal, or it may be soldered, or sonic or spot welded. The cathode of diode 34 in that case may be spliced or soldered to one of the coils 42.

If diode 34 is positioned on the output side as depicted in FIGS. 3 and 5, the diode is mounted on the stator with its anode connected to a coil 42 by soldering or splicing, and its cathode is connected to the output wire by soldering or splicing. The body of the diode is attached to the stator with epoxy. If diode 34 is positioned between two coils 42, it is mounted to the stator by splicing or soldering its anode to one coil 42, and splicing or soldering its cathode to another coil 42.

Several embodiments of the present invention have been discussed above and are depicted in the drawings. However, additional alternate embodiments will be apparent to those skilled in the art and are contemplated as being within the scope of the present invention. Therefore, the scope of the present invention is to be limited only by the following claims.

Claims

1. An alternator assembly for an internal combustion engine, comprising:
stator means including at least one coil means cooperable with a moving magnetic field for producing an output current in said coil means; and
rectifier means mounted on said stator means for rectifying said output current.

2. The alternator assembly of claim 1, wherein said rectifier means includes a diode connected in series with said coil means.

3. The alternator assembly of claim 1, wherein said stator means comprises a stationary annular ring member having an inner surface and an outer surface, and said coil means is mounted on said outer surface.

4. The alternator assembly of claim 3, wherein said coil means comprises a plurality of spaced wire coils arranged circumferentially about said outer surface.

5. The alternator assembly of claim 4, wherein said moving magnetic field is provided by a plurality of rotating magnets arranged in opposing relation to said wire coils and concentric therewith.

6. The alternator assembly of claim 5, wherein said rotating magnets are mounted on an inner surface of a rotating flywheel.

7. The alternator assembly of claim 1, wherein said rectified output current is unregulated, half-wave rectified direct current.

8. An alternator assembly for an internal combustion engine, comrising:

stator means includingç

at least one first coil means cooperable with a moving magnetic field for producing a first output current in said first coil means;

at least one second coil means cooperable with a moving magnetic field for producing a second output current in said second coil means; and

rectifier means mounted on said stator means for rectifying said first output current.

9. The alternator assembly of claim 8, wherein said rectifier means includes a diode connected in series with said first coil means.

10. The alternator assembly of claim 8, wherein said stator means comprises a stationary annular ring member having an inner surface and an outer surface, said outer surface having a first portion and a second portion, and wherein said first coil means is mounted on the first portion of said outer surface and said second coil means is mounted on the second portion of said outer surface.

11. The alternator assembly of claim 10, wherein said first coil means comprises a first plurality of spaced wire coils arranged circumferentially about the first portion of said outer surface, and wherein said second coil means comprises a second plurality of spaced wire coils arranged circumferentially about the second portion of said outer surface.

12. The alternator assembly of claim 11, wherein said moving magnetic field is provided by a plurality of rotating magnets arranged in opposing relation to said first and second pluralities of wire coils and concentric therewith.

13. The alternator assembly of claim 12, wherein said rotating magnets are mounted on an inner surface of a rotating flywheel.

14. The alternator assembly of claim 8, wherein said second output current is alternating current.

15. The alternator assembly of claim 8, wherein said rectified first output current is unregulated, half-wave rectified direct current.

FIG. 1
PRIOR ART

FIG. 2

FIG. 3

6

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-980792 (ROBERT BOSCH)<br>* page 1, line 49 - page 2, line 25; figures 1, 2 * | 1, 2, 5-7 | H02K11/00<br>H02K21/22<br>H02K21/48 |
| Y | | 3, 4, 8-15 | |
| Y | US-A-4233534 (PAUL A. THARMAN)<br>* column 4, lines 1 - 46 *<br>* column 5, lines 7 - 19 *<br>* column 6, lines 37 - 39; figures 3, 4 * | 3, 4, 8-15 | |
| A | | 1, 2, 5-7 | |
| X | GB-A-2060271 (WIPAC DEVELOPMENT)<br>* page 2, lines 25 - 27; figures 1-3 * | 1, 2 | |
| A | US-E-28960 (PAUL A. THARMAN)<br>* column 3, lines 11 - 45; figure 1 * | 1-15 | |
| A | CH-A-479193 (SKIL CORPORATION)<br>* column 4, line 46 - column 5, line 22; figures 2, 3, 10, 11 * | 1, 8 | TECHNICAL FIELDS SEARCHED (Int. Cl.5 ) |
| A | US-A-3733503 (F. M. POTTER)<br>* column 2, lines 4 - 7; figure 1 * | 1, 8 | H02K |

The present search report has been drawn up for all claims

| Place of search | Date of completion of the search | Examiner |
|---|---|---|
| THE HAGUE | 04 FEBRUARY 1991 | ZANICHELLI F. |

EPO FORM 1503 03.82 (P0401)